Europäisches Patentamt

European Patent Office

Office européen des brevets

(19)

(11)  **EP 1 169 787 B1**

(12)  **EUROPÄISCHE PATENTSCHRIFT**

(45) Veröffentlichungstag und Bekanntmachung des Hinweises auf die Patenterteilung:
**03.08.2005  Patentblatt 2005/31**

(51) Int Cl.$^7$: **H04B 7/005**

(21) Anmeldenummer: **00934858.2**

(22) Anmeldetag: **03.04.2000**

(86) Internationale Anmeldenummer:
**PCT/DE2000/001021**

(87) Internationale Veröffentlichungsnummer:
**WO 2000/065744 (02.11.2000 Gazette 2000/44)**

(54) **VERFAHREN ZUR REGELUNG DER SENDELEISTUNG IN EINEM FUNKSYSTEM UND ENTSPRECHENDES FUNKSYSTEM**

METHOD FOR REGULATING THE TRANSMITTER POWER IN A RADIO SYSTEM AND CORRESPONDING RADIO SYSTEM

PROCEDE POUR REGULER LA PUISSANCE D'EMISSION DANS UN SYSTEME RADIO, ET SYSTEME RADIO CORRESPONDANT

(84) Benannte Vertragsstaaten:
**DE FR GB IT**

(30) Priorität: **22.04.1999  DE 19918372**

(43) Veröffentlichungstag der Anmeldung:
**09.01.2002  Patentblatt 2002/02**

(73) Patentinhaber: **SIEMENS AKTIENGESELLSCHAFT**
**80333 München (DE)**

(72) Erfinder: **RAAF, Bernhard**
**D-81475 München (DE)**

(56) Entgegenhaltungen:
**EP-A- 0 893 889**          **WO-A-99/67899**

**Beschreibung**

Die vorliegende Erfindung betrifft ein Verfahren zur Regelung der Sendeleistung in einem Funksystem sowie ein entsprechendes Funksystem, insbesondere ein entsprechendes Mobilfunksystem.

Die Regelung der Sendeleistung stellt bei Mobilfunksystemen ein wichtiges Leistungsmerkmal dar, um mögliche Interferenzen zwischen den einzelnen Verbindungen unterbinden und somit die Kapazität und Qualität der Verbindungen verbessern zu können und um die mittlere Sendeleistung reduzieren und bestmöglich an die Bedürfnisse anpassen sowie Verluste über die Übertragungskanäle wenigstens teilweise ausregeln zu können.

Zu diesem Zweck wird in dem Mobilfunksystem empfangsseitig das von einem Sender übertragene Signal ausgewertet, um davon abhängig Informationen für die Leistungsregelung erzeugen und an den Sender übermitteln zu können, der daraufhin die Sendeleistung entsprechend den Leistungsregelungsinformationen einstellt.

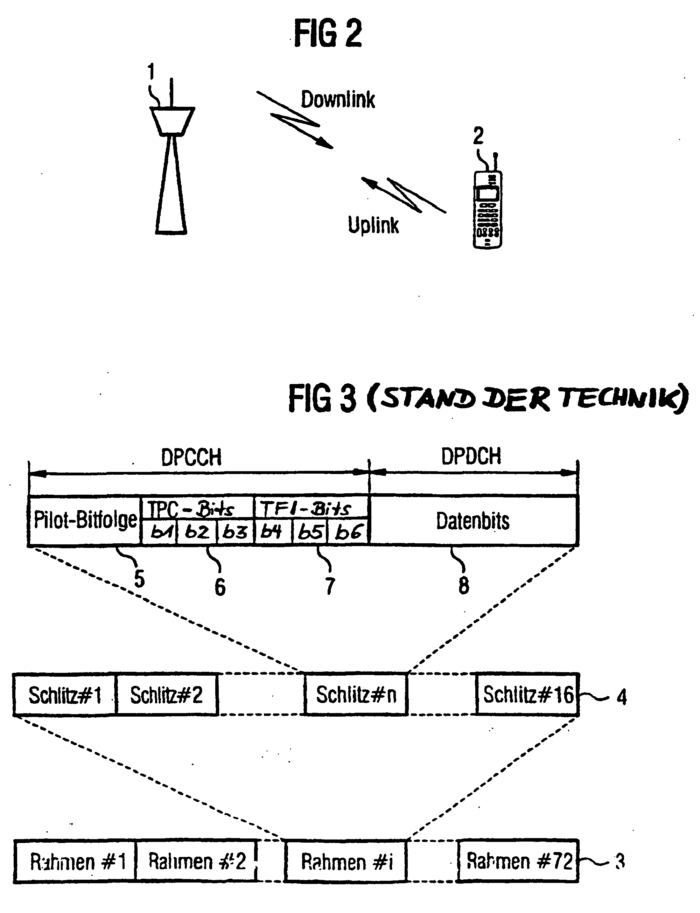

Zur näheren Erläuterung des Prinzips der Leistungsregelung ist in Fig. 2 die Kommunikation zwischen einer Basisstation 1 und einer Mobilstation 2 eines Mobilfunksystems dargestellt. Eine Verbindung von der Basisstation 1 zum Mobilteil 2 wird als Downlink- oder Forward Link-Verbindung bezeichnet, während eine Verbindung von dem Mobilteil 2 zu der Basisstation 1 als Uplink- oder Reverse Link-Verbindung bezeichnet wird. Zur Leistungsregelung des Downlinks wird in der Mobilstation 2 das jeweilige Empfangssignal ausgewertet und davon abhängig eine Leistungsregelungsinformation erzeugt und an die Basisstation 1 zurückgesendet, so daß die Basisstation 1 die Sendeleistung entsprechend einstellen kann. Für die Regelung des Uplinks wird das Empfangssignal in der Basisstation 1 ausgewertet und dort die Leistungsregelungsinformation erzeugt und die Mobilstation 2 zur Leistungsanpassung angewiesen.

Die Übertragung der Leistungsregelungsinformation erfolgt dabei abhängig von dem jeweiligen Mobilfunksystem eingebunden in eine vorgegebene Rahmenstruktur.

In Fig. 3 ist als Beispiel die Rahmen- und Zeitschlitzstruktur für eine Downlink-Verbindung eines gemäß einem Codemultiplex-Vielfachzugriffsverfahren (CDMA, Code Division Multiple Access) betriebenen Mobilfunksystems dargestellt. Die in Fig. 3 gezeigte Rahmen- und Zeitschlitzstruktur entspricht insbesondere einen auch als DPCH (Dedicated Physical Channel) bezeichneten UMTS-Mobilfunkkanal (Universal Mobile Telecommunication System) gemäß dem derzeitigen Stand der UMTS-Standardisierung. UMTS ist die Bezeichnung für Mobilfunksysteme der dritten Generation mit dem Ziel eines weltweiten, universalen Mobilfunkstandards. Gemäß dem UMTS-Mobilfunkstandard ist als Vielfachzugriffsverfahren das sogenannte WCDMA-Verfahren (Wideband Code Division Multiple Access) vorgesehen.

Die in Fig. 3 gezeigte Rahmenstruktur mit einer Dauer von 720 ms umfaßt insbesondere 72 identisch aufgebaute Rahmen 3 mit einer Rahmendauer von 10 ms, wobei jeder Rahmen wiederum jeweils 16 Zeitschlitze 4 mit einer Zeitschlitzdauer von 0,625 ms aufweist. Jeder Zeitschlitz 4 umfaßt auf einen logischen Steuerkanal (DPCCH, Dedicated Physical Control Channel) und einen logischen Datenkanal (DPDCH, Dedicated Physical Data Channel) aufgeteilte Informationen. Der DPCCH-Abschnitt umfaßt eine Pilot-Bitfolge 5 sowie eine sogenannte TPC-Information (Transmitter Power Control) 6 und eine TFI-Information (Transmitter Format Identifier) 7. Der DPDCH-Abschnitt umfaßt Nutzdatenbits 8. Die in Fig. 3 gezeigte Struktur kann beispielsweise dem Dokument ETSI STC SMG2 UMTS-L1: Tdoc SMG2 UMTS-L1 221/98 entnommen werden.

Die Pilot-Bitfolge 5 dient zur Schätzung der Kanalimpulsantwort während einer sogenannten Trainingssequenz und entspricht einem bekannten Bitmuster. Durch Vergleich des Empfangssignals mit der bekannten Pilot-Bitfolge kann der Empfänger die Kanalimpulsantwort des Mobilfunkkanals ermitteln bzw. schätzen.

Die TFI-Information 7 dient als Formatkennung für den jeweiligen Empfänger. Die TFI-Bits werden nach dem aktuellen WCDMA-Standard mit Hilfe eines eigenen Codierungsverfahrens geschützt und durch Interleaving über einen ganzen Rahmen (Zeitdauer 10 ms) verteilt. Umfaßt die TFI-Information 7 jedes Zeitschlitzes beispielsweise drei in Fig. 3 gezeigte Bits b4... b5, ergeben sich pro Rahmen, der 16 Zeitschlitze umfaßt, insgesamt $3*16 = 48$ TFI-Bits, die durch ein sogenanntes biorthogonales Codierverfahren codiert werden.

Die TPC-Information 6 stellt den von dem Empfänger erzeugten und an den Sender übermittelten Befehl zur Einstellung der Sendeleistung dar. Zu diesem Zweck wird im Empfänger die Empfangsleistung oder der Signal-Rausch-Abstand des Empfangssignals mit einem vorgegebenen Referenzwert verglichen und abhängig von der Abweichung der Wert für den Leistungseinstellbefehl ermittelt. D.h. bei Überschreiten des Referenzwerts durch die Empfangsleistung wird ein Befehl zur Verringerung der Sendeleistung erzeugt, während ein Befehl zur Erhöhung der Sendeleistung erzeugt wird, wenn die Empfangsleistung den vorgegebenen Referenzwert unterschreitet. Abhängig von dem Vergleichsergebnis wird von dem Empfänger somit ein digitaler oder binärer Einstellbefehl an den Sender übertragen. Dabei ist ein Befehl zur Erhöhung der Sendeleistung (Power Up-Befehl) mit eine 1 codiert, während ein Befehl zur Verringerung der Sendeleistung (Power Down-Befehl) mit eine 0 codiert ist. In jedem Fall wird der Einstellbefehl nach einer entsprechenden Modulation an den Sender übertragen. Nach dem derzeit diskutierten WCDMA-Standard für UMTS-Mobilfunksysteme erfolgt die Übertragung durch eine QPSK-Modulation (Quadrature Phase Shift Keying), wodurch die binäre 1 bzw. 0 auf den Wert -1 bzw. +1 abgebildet wird, mit anschließender Spreizung des Leistungsregelungssignals.

Die Leistungsregelungs- oder Leistungsregelungsinformation besteht somit in der Regel lediglich aus einem Bit, welches angibt, ob sendeseitig die Sendeleistung erhöht oder verringert werden soll. Um diese Bit mit einer ausreichend geringen Fehlerwahrscheinlichkeit übertragen zu können, wird das Bit wiederholt übertragen. Die in Fig. 3 gezeigte TPC-Information umfaßt demzufolge beispielsweise drei mit einem identischen Informationsgehalt nacheinander übertragene Bits b1...b3. Die Leistungsregelungsinformation kann jedoch auch aus einer anderen Anzahl von Bits, insbesondere aus mehr Bits, bestehen.

An sich bekannte und leistungsfähigere Codierverfahren, mit denen eine verbesserte Fehlerwahrscheinlichkeit erzielbar wäre, werden nicht angewendet, da die TPC-Bits in dem Empfänger der TPC-Information sofort ausgewertet werden müssen, um die Sendeleistung unverzüglich entsprechend nachregeln zu können. Gemäß dem Stand der Technik werden die TPC-Bits somit nicht zusammen mit anderen Bits oder Daten codiert und können auch nicht über einen größeren zeitlichen Bereich, beispielsweise über einen ganzen Rahmen, verteilt werden, was als Interleaving bezeichnet wird.

Es besteht jedoch das Bedürfnis nach einer möglichst hohen Zuverlässigkeit einer korrekten Übertragung der TPC-Bits, um zu vermeiden, daß der Sender den entsprechenden Leistungseinstellbefehl falsch oder nicht zuverlässig empfängt.

In dem Dokument ETSI SMG2 L1 Expert Group, Tdos SMG2 UMTS-L1 736/98, Espoo, Finland, December 14-18, 1998, "Soft TPC Interpretation for Improved Closed Loop Power Control" wird die Zuverläßlichkeit des an den Sender übertragenen Leistungseinstellbefehls sowie eine möglichst optimale Einstellung des Werts des Leistungseinstellbefehls in Abhängigkeit von der Zuverläßlichkeit seines Empfangs diskutiert. Dabei wird von den Autoren aufgezeigt, daß der Wert des Leistungseinstellbefehls in Abhängigkeit von der Funktion tanh(A/2) gewählt werden sollte, wobei A die Zuverläßlichkeit des Leistungseinstellbefehls in Form einer Log-Likelihood-Verteilung darstellt.

Ein weiteres Leistungsregelungssystem noch dem Stand der Technik ist in EP-A-0893889 dargestellt.

Der vorliegenden Erfindung liegt die Aufgabe zugrunde, ein verbessertes Verfahren zur Regelung der Sendeleistung in einem Funksystem, insbesondere in einem Mobilfunksystem, sowie ein entsprechendes Funksystem zu schaffen, womit die Zuverlässigkeit der Übertragung der Leistungsregelungsinformationen verbessert werden kann.

Diese Aufgabe wird erfindungsgemäß durch ein Verfahren mit den Merkmalen des Anspruches 1 bzw. ein entsprechendes Mobilfunksystem mit den Merkmalen des Anspruches 13 gelöst. Die Unteransprüche beschreiben jeweils bevorzugte und vorteilhafte Ausführungsformen der vorliegenden Erfindung.

Erfindungsgemäß wird die in einem Zeitschlitz übertragene Leistungsregelungsinformation mit weiteren Daten gemeinsam codiert, welche in demselben Zeitschlitz übertragen werden sollen. Sowohl die Leistungsregelungsinformation als auch diese weiteren Daten oder Informationen werden bevorzugt binär übertragen, so daß die in einem Zeitschlitz übertragene Leistungsregelungsinformation (TPC-Bits) nicht einfach wiederholt übertragen, sondern gemeinsam mit weiteren Bits, welche innerhalb desselben Zeitschlitzes übertragen werden sollen, codiert wird. Bei diesen weiteren Bits kann es sich beispielsweise bei einem WCDMA-Mobilfunksystem um die Bits der TFI-Information (TFI-Bits) handeln. Es können jedoch grundsätzlich auch andere Bits, z.B. Datenbits, für die Codierung mit den TPC-Bits verwendet werden, solange diese in demselben Zeitschlitz wie die TPC-Bits übertragen werden sollen oder können.

Das zur Codierung der TPC-Bits verwendete Codierungsverfahren kann im Prinzip beliebig gewählt werden. Vorteilhafterweise wird das Codierungsverfahren jedoch derart gewählt, daß bei der Codierung Redundanz hinzugefügt wird, welche bei Empfang der codierten Leistungsregelungsinformation zur Überprüfung des übertragenen Werts der Leistungsregelungsinformation ausgenutzt werden kann.

Das Codierungsverfahren kann beispielsweise derart sein, daß die TPC-Bits mit den damit zu codierenden weiteren Bits zu einem gemeinsamen binären Datenwort codiert werden, dessen Bitwerte zumindest teilweise sowohl von dem Wert der TPC-Bits als auch von dem Wert der weiteren Bits, beispielsweise der TFI-Bits, abhängen. So können die miteinander zu codierenden Bits insbesondere durch eine logische Exklusiv-Oder-Verknüpfung verknüpft werden.

Der Vorteil der Erfindung besteht darin, daß aufgrund der hinzugefügten Redundanz, welche sich durch die Abhängigkeit der codierten Bits sowohl von dem Wert der TPC-Bits als auch von dem Wert der damit zu codierenden weiteren Bits ergibt, zusätzliche Schätzwerte für die zu übetragende Leistungsregelungsinformation gewonnen werden können, die anschließend zur Überprüfung der empfangenen Leistungsregelungsinformation verwendbar sind, um die Zuverlässigkeit der Übertragung der Leistungsregelungsinformation zu erhöhen.

Die vorliegende Erfindung wird bevorzugt in CDMA-Mobilfunksystemen, insbesondere in WCDMA-Mobilfunksystemen, wie z.B. dem UMTS-Mobilfunksystem, eingesetzt. Darüber hinaus wird die Erfindung in einem Mobilfunksystem bevorzugt im Downlink, d.h. bei der Übertragung der Leistungsregelungsinformation von der Basisstation zu der Mobilstation eingesetzt, da sich bei CDMA-Mobilfunksystemen im Uplink aufgrund des verwendeten Codemultiplexverfahrens erhöhte Verzögerungszeiten ergeben. Grundsätzlich ist die vorliegende Erfindung jedoch auf jede Art von Funksystemen anwendbar, bei denen eine in eine (Rahmen- und) Zeitschlitzstruktur eingebettete Übertragung einer Leistungsregelungsinformation vorgesehen ist.

Die Erfindung wird nachfolgend unter Bezugnahme auf die beigefügte Zeichnung anhand des Einsatzes in dem Downlink eines WCDMA-Mobilfunksystems, insbesondere eines UMTS-Mobilfunksystems, näher erläutert. Dabei zeigt

     Fig. 1 die Rahmen- und Zeitschlitzstruktur gemäß der vorliegenden Erfindung für eine sogenannte Downlink-Verbindung eines WCDMA-Mobilfunksystems, auf das die vorliegende Erfindung bevorzugt angewendet wird,

     Fig. 2 eine schematische Darstellung eines Mobilfunksystems zur Erläuterung der Informationsübertragung bei der Leistungsregelung, und

     Fig. 3 die bekannte Rahmen- und Zeitschlitzstruktur für eine Downlink-Verbindung eines WCDMA-Mobilfunksystems.

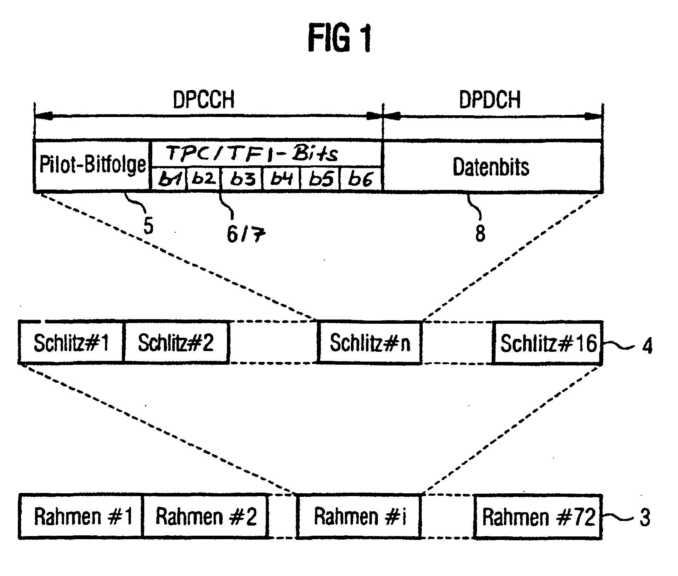

Die in Fig. 1 gezeigte Rahmen- und Zeitschlitzstruktur verdeutlicht das der vorliegenden Erfindung zugrundeliegende Prinzip, wobei der Grundaufbau dieser Struktur der in Fig. 3 gezeigten Struktur entspricht, so daß ergänzend auf die entsprechenden Erläuterungen zu Fig. 3 verwiesen wird.

Wie bereits eingangs beschrieben worden ist, werden bei der in Fig. 3 gezeigten Struktur in einem Zeitschlitz 4 die (nachfolgend als TPC-Bits bezeichneten) Bits der Leistungsregelungsinformation 6 getrennt von den weiteren in demselben Zeitschlitz zu übertragenden Information gesendet. Insbesondere umfaßt die Leistungsregelungsinformation herkömmlicherweise lediglich einen Bitwert, der mehrmals nacheinander, gemäß Fig. 3 beispielsweise dreimal in Form der TPC-Bits b1...b3, übertragen wird. Von den TPC-Bits b1...b3 sind die weiteren Steuer- und Datenbits getrennt.

Erfindungsgemäß wird jedoch diese Trennung aufgehoben, und die TPC-Bits b1...b3 werden mit weiteren Bits gemeinsam codiert, welche in demselben Zeitschlitz 4 übertragen werden. Dabei kann es sich beispielsweise um die (nachfolgend als TFI-Bits bezeichneten) Bits der Formatkennungsinformation 7 handeln. Ebenso sind jedoch auch andere Bits, wie z.B. Bits der Dateninformation 8, zur Codierung der TPC-Bits denkbar.

Zur Erläuterung des der Erfindung zugrundeliegenden Prinzips sei nachfolgend beispielhaft angenommen, daß die Leistungsregelungsinformation drei TPC-Bits b1...b3 umfaßt, welche mit drei TFI-Bits b4...b6 der Formatkennungsinformation gemeinsam redundant codiert werden sollen. Mit p sei der Wert der zu übertragenden Leistungsregelungsinformation bezeichnet, während mit t der Wert für die in demselben Zeitschlitz 4 zu übertragende Formatkennungsinformation bezeichnet sei.

Bei der in Fig. 3 gezeigten herkömmlichen Struktur würde den Bits b1...b3 allesamt der Wert p zugewiesen werden, während die Bits b4...b6 davon getrennt den Wert t definieren.

Gemäß einem bevorzugten Ausführungsbeispiel der Erfindung wird nunmehr vorgeschlagen, aus den Bits b1...b6 ein für die Leistungsregelungs- und Formatkennungsinformation gemeinsames und codiertes Datenwort zu generieren, dessen Bitwerte zumindest teilweise sowohl von dem Wert p als auch von dem Wert t beeinflußt werden. Insbesondere können die Bits b1...b6 dieses codierten Datenworts im Zuge der Codierung wie folgt belegt werden:

$$b1 = b2 = p$$
$$b3 = b4 = p \text{ XOR } t$$
$$b5 = b6 = t$$

Das codierte Datenwort umfaßt somit insgesamt eine der Summe der TPC-Bits und der TFI-Bits entsprechende Bitanzahl, wobei jedoch ein Teil der Bits dieses Datenworts lediglich mit dem TPC-Wert p belegt wird (vgl. die Bits b1 und b2), während ein weiterer Teil dieses Datenworts lediglich mit dem TFI-Wert t belegt wird (vgl. die Bits b5 und b6). Ein dritter Abschnitt des Datenworts wird schließlich durch eine logische Verknüpfung, insbesondere durch eine logische Exklusiv-Oder-Verknüpfung, des TPC-Werts p mit dem TFI-Wert t gewonnen (vgl. die Bits b3 und b4). Gegenüber der in Fig. 3 gezeigten herkömmlichen Struktur werden somit bei dem zuvor vorgestellten Codierungsverfahren die Bits b3...b6 abweichend verwendet.

Nach der Übertragung dieses Codeworts mit den codierten Bits b1...b6 an den Sender zur entsprechenden Nachregelung der Sendeleistung, kann dieser anhand der in den Bits b3...b6 enthaltenen Informationen einen Schätzwert p' für die TPC-Information berechnen. Zu diesem Zweck ermittelt der Sender aus b5 und b6 einen Schätzwert für t, so daß aus den Bits b3 und b4 unter Zugrundelegung des Schätzwerts von t und unter Ausnutzung der bekannten XOR-Funktion der Schätzwert p' berechnet werden kann.

Dieser Schätzwert p' ersetzt somit den bei der in Fig. 3 gezeigten bekannten Struktur aus dem Bit b3 gewonnenen Schätzwert für die Leistungsregelungsinformation. Diese Vorgehensweise weist den Vorteil auf, daß p' auf jeweils zwei Bits basiert, wobei durch diese Zusammenfassung eine um 3dB verbesserte Ubertragungsfähigkeit erzielt werden kann.

Durch die Berechnung der XOR-Funktion wird zwar eine höhere Bitfehlerrate hervorgerufen. Diese wird jedoch zumindest bei nicht allzu schlechten Kanal- oder Übertragungsverhältnissen durch den Gewinn mehr als kompensiert. Dies soll nachfolgend kurz erläutert werden.

Wird mit f die Wahrscheinlichkeit bezeichnet, daß ein Bit falsch detektiert wird, so verbessert sich bei einer doppelten Übertragung dieses Bits die Wahrscheinlichkeit einer falschen Detektion näherungsweise auf $f^2$. Andererseits verschlechtert sich die Wahrscheinlichkeit einer falschen Detektion durch die XOR-Berechnung näherungsweise auf 2f, da in diesem Fall die XOR-Berechnung bereits dann einen falschen Wert liefert, wenn einer der beiden XOR-verknüpften Werte oder Bits falsch detektiert worden ist. Das zuvor vorgestellte Codierungsverfahren liefert somit dann bessere Ergebnisse, wenn die folgende Beziehung erfüllt ist:

$$2f^2 < f$$

oder

$$f < 0,5$$

Für WCDM-Ubertragungsverfahren ist diese Beziehung erfüllt, so daß die Erfindung insbesondere bei Anwendung in (W)CDMA-Mobilfunksystemen eine verbesserte Übertragungssicherheit gewährleistet.

## Patentansprüche

1. Verfahren zur Regelung der Sendeleistung in einem Funksystem,
   wobei ein von einem Empfänger (1; 2) über einen Übertragungskanal des Funksystems empfangenes Signal eines Senders (2; 1) ausgewertet und davon abhängig eine Leistungsregelungsinformation (6) erzeugt und in eine Zeitschlitzstruktur (4) eingebettet an den Sender (2; 1) gesendet wird,
   wobei in dem Sender (2; 1) die Sendeleistung in Abhängigkeit von der Leistungsregelungsinformation (6) eingestellt wird, und
   wobei in dem Empfänger (1; 2) die Leistungsregelungsinformation (6) eines Zeitschlitzes (4) gemeinsam mit in demselben Zeitschlitz (4) zu übertragenden weiteren Daten codiert und an den Sender (2; 1) übertragen wird,
   **dadurch gekennzeichnet,**
   **daß** die Codierung derart durchgeführt wird, daß die Leistungsregelungsinformation (6) eines Zeitschlitzes (4) unter Hinzufügung von Redundanz gemeinsam mit in demselben Zeitschlitz (4) zu übertragenden weiteren Daten zu einem gemeinsamen Datenwort codiert wird, wobei zumindest ein Bitwert des Datenwortes von der Leistungsregelungsinformation und von den weiteren Daten abhängt.

2. Verfahren nach Anspruch 1,
   **dadurch gekennzeichnet,**

   **daß** die weiteren Daten, mit denen die Leistungsregelungsinformation (6) gemeinsam codiert wird, Daten einer Formatkennungsinformation (7) sind.

3. Verfahren nach Anspruch 1,
   **dadurch gekennzeichnet,**
   **daß** die weiteren Daten, mit denen die Leistungsregelungsinformation (6) gemeinsam codiert wird, Nutzdaten (8) sind.

4. Verfahren nach einem der vorhergehenden Ansprüche,
   **dadurch gekennzeichnet,**
   **daß** die Leistungsregelungsinformation binär übertragen wird.

5. Verfahren nach Anspruch 4,
   **dadurch gekennzeichnet,**
   **daß** die Bits der Leistungsregelungsinformation (6) mit den Bits der weiteren Daten zu einem gemeinsamen binären Datenwort (b1...b6) codiert werden.

6. Verfahren nach Anspruch 5,
   **dadurch gekennzeichnet,**
   **daß** das codierte Datenwort eine der Summe der Bits der Leistungsregelungsinformation (6) und der Bits der weiteren Daten entsprechenden Anzahl von Bits (b1...b6) umfaßt.

7. Verfahren nach Anspruch 5 oder 6,
   **dadurch gekennzeichnet,**
   **daß** bei der Codierung mindestens einem Bit (b1, b2) des codierten Datenworts der Wert der in dem entsprechenden Zeitschlitz (4) zu übertragenden Leistungsregelungsinformation (6) zugewiesen wird.

8. Verfahren nach einem der Ansprüche 5-7,
   **dadurch gekennzeichnet,**
   **daß** bei der Codierung mindestens einem Bit (b5, b6) des codierten Datenworts der Wert der in dem entsprechenden Zeitschlitz (4) zu übertragenden Information (7) der weiteren Daten zugewiesen wird.

9. Verfahren nach einem der Ansprüche 5-8,
   **dadurch gekennzeichnet,**
   **daß** bei der Codierung mindestens einem Bit (b4) des codierten Datenworts der Wert zugewiesen wird, der einer logischen Operation zwischen dem in dem entsprechenden Zeitschlitz (4) zu übertragenden Leistungsregelungsinformation (6) und der in demselben Zeitschlitz (4) zu übertragenden Information (7) der weiteren Daten entspricht.

10. Verfahren nach Anspruch 9,
    **dadurch gekennzeichnet,**
    **daß** als logische Operation eine logische Exklusiv-Oder-Operation verwendet wird.

11. Verfahren nach Anspruch 9 oder 10,
**dadurch gekennzeichnet,**
**daß** in dem Sender (2; 1) durch eine entsprechende Decodierung die Leistungsregelungsinformation (6) wiedergewonnen wird,
wobei bei der Decodierung anhand des durch die logische Operation erhaltenen Werts des entsprechenden Bits des codierten Datenworts ein Schätzwert für die Leistungsregelungsinformation ermittelt wird.

12. Verfahren nach einem der vorhergehenden Ansprüche,
**dadurch gekennzeichnet,**
**daß** der die codierte Leistungsregelungsinformation (6) erzeugende Empfänger (1) eine Basisstation eines Mobilfunksystems und der die Leistungsregelungsinformation empfangende und seine Sendeleistung entsprechend einstellende Sender (2) eine Mobilstation des Mobilfunksystems ist, so daß die codierte Leistungsregelungsinformation (6) über eine Downlink-Verbindung zwischen dem Empfänger (1) und dem Sender (2) übertragen wird.

13. Funksystem,
mit einem Sender (2; 1), und
mit einem Empfänger (1; 2) zum Empfangen eines über einen Übertragungskanal des Mobilfunksystems übertragenen Signals des Senders (2; 1) und zum Auswerten des empfangenen Signals, um davon abhängig eine Leistungsregelungsinformation (6) zu erzeugen und in eine Zeitschlitzstruktur (4) eingebettet an den Sender (2; 1) zu senden,
wobei der Sender (2; 1) derart ausgestaltet ist, daß er die Sendeleistung in Abhängigkeit von der Leistungsregelungsinformation des Empfängers (1; 2) einstellt,
wobei der Empfänger (1; 2) derart ausgestaltet ist, daß er die Leistungsregelungsinformation (6) eines Zeitschlitzes (4) gemeinsam mit in demselben Zeitschlitz (4) zu übertragenden weiteren Daten codiert und an den Sender (2; 1) überträgt.
**dadurch gekennzeichnet,**
**daß** der Empfänger (1; 2) derart ausgestaltet ist, daß er die Leistungsregelungsinformation (6) eines Zeitschlitzes (4) unter Hinzufügung von Redundanz gemeinsam mit in demselben Zeitschlitz (4) zu übertragenden weiteren Daten zu einem gemeinsamen Datenwort codiert, wobei zumindest ein Bitwert des Datenwortes von der Leistungsregelungsinformation und von den weiteren Daten abhängt.

14. Funksystem nach Anspruch 13,
**dadurch gekennzeichnet,**
**daß** der Empfänger (1; 2) derart ausgestaltet ist, daß er die Leistungsregelungsinformation (6) gemeinsam mit Daten einer Formatkennungsinformation (7) desselben Zeitschlitzes (4) codiert.

15. Funksystem nach Anspruch 13,
**dadurch gekennzeichnet,**
**daß** der Empfänger (1; 2) derart ausgestaltet ist, daß er die Leistungsregelungsinformation (6) gemeinsam mit Nutzdaten (7) desselben Zeitschlitzes (4) codiert.

16. Funksystem nach einem der Ansprüche 13-15,
**dadurch gekennzeichnet,**
**daß** der Empfänger (1; 2) derart ausgestaltet ist, daß er die Leistungsregelungsinformation (6) binär an den Sender (2; 1) sendet.

17. Funksystem nach Anspruch 16,
**dadurch gekennzeichnet,**
**daß** der Empfänger (1; 2) derart ausgestaltet ist, daß er die Bits der Leistungsregelungsinformation (6) mit den Bits der weiteren Daten zu einem gemeinsamen binären Datenwort (b1...b6) codiert.

18. Funksystem nach Anspruch 17,
**dadurch gekennzeichnet,**
**daß** der Empfänger (1; 2) derart ausgestaltet ist, daß er bei der Codierung mindestens einem Bit (b1, b2) des codierten gemeinsamen Datenworts den Wert der in dem entsprechenden Zeitschlitz (4) zu übertragenden Leistungsregelungsinformation (6) zuweist.

19. Funksystem nach Anspruch 17 oder 18,
**dadurch gekennzeichnet,**
**daß** der Empfänger (1; 2) derart ausgestaltet ist, daß er bei der Codierung mindestens einem Bit (b5, b6) des codierten gemeinsamen Datenworts den Wert der in dem entsprechenden Zeitschlitz (4) zu übertragenden Information (7) der weiteren Daten zuweist.

20. Funksystem nach einem der Ansprüche 17-19,
**dadurch gekennzeichnet,**
**daß** der Empfänger (1; 2) derart ausgestaltet ist, daß er bei der Codierung mindestens einem Bit (b4) des codierten gemeinsamen Datenworts einen Wert zuweist, der einer logischen Operation zwischen der in dem entsprechenden Zeitschlitz (4) zu übertragenden Leistungsregelungsinformation (6) und der in demselben Zeitschlitz (4) zu übertragenden Information (7) der weiteren Daten entspricht.

21. Funksystem nach Anspruch 20,
**dadurch gekennzeichnet,**
**daß** die von dem Empfänger (1; 2) bei der Codierung ausgeübte logische Operation eine logische Exklusiv-Oder-Operation ist.

**22.** Funksystem nach Anspruch 20 oder 21,
**dadurch gekennzeichnet,**
**daß** der Sender (2; 1) derart ausgestaltet ist, daß er nach Empfang des codierten gemeinsamen Datenworts durch eine entsprechende Decodierung die Leistungsregelungsinformation (6) wiedergewinnt und dabei anhand des durch die logische Operation erhaltenen Werts des entsprechenden Bits des codierten gemeinsamen Datenworts einen Schätzwert für die Leistungsregelungsinformation ermittelt.

**23.** Funksystem nach einem der Ansprüche 13-22,
**dadurch gekennzeichnet,**
**daß** das Funksystem ein CDMA-Mobilfunksystem ist.

**24.** Funksystem nach Anspruch 23,
**dadurch gekennzeichnet,**
**daß** der die codierte binäre Leistungsregelungsinformation (6) erzeugende Empfänger (1) eine Basisstation des Mobilfunksystems und der die Leistungsregelungsinformation empfangende und seine Sendeleistung entsprechend einstellende Sender (2) eine Mobilstation des Mobilfunksystems ist.

**Claims**

**1.** Method for controlling the transmission power in a radio system,
in which a signal which is received by a receiver (1; 2) via a transmission channel of the radio system from a transmitter (2; 1) is evaluated, and power control information (6) is produced as a function of this and is sent, embedded in a timeslot structure (4), to the transmitter (2; 1),
in which the transmission power is set in the transmitter (2; 1) as a function of the power control information (6),
and
in which, in the receiver (1; 2), the power control information (6) in one timeslot (4) is coded, and is transmitted to the transmitter (2; 1), together with further data to be transmitted in the same timeslot (4),
**characterized**
**in that** the coding is carried out in such a manner that the power control information (6) in a timeslot (4) is coded, with the addition of redundancy, together with further data to be transmitted in the same timeslot (4) to form a common data word, with at least one bit value in the data word depending on the power control information and on the further data.

**2.** Method according to Claim 1,
**characterized**

**in that** the further data together with which the power control information (6) is coded is data for format identification information (7).

**3.** Method according to Claim 1,
**characterized**
**in that** the further data together with which the power control information (6) is coded is user data (8).

**4.** Method according to one of the preceding claims,
**characterized**
**in that** the power control information is transmitted in binary form.

**5.** Method according to Claim 4,
**characterized**
**in that** the bits in the power control information (6) are coded with the bits of the further data to form a common binary data word (b1...b6).

**6.** Method according to Claim 5,
**characterized**
**in that** the coded data word comprises a number of bits (b1...b6) corresponding to the sum of the bits in the power control information (6) and the bits in the further data.

**7.** Method according to Claim 5 or 6,
**characterized**
**in that**, during the coding process, at least one bit (b1, b2) in the coded data word is assigned the value of the power control information (6) to be transmitted in the corresponding timeslot (4).

**8.** Method according to one of Claims 5-7,
**characterized**
**in that**, during the coding process, at least one bit (b5, b6) in the coded data word is assigned the value of the information (7) to be transmitted in the corresponding timeslot (4) from the further data.

**9.** Method according to one of Claims 5-8,
**characterized**
**in that**, during the coding process, at least one bit (b4) in the coded data word is assigned the value which corresponds to a logic operation between the power control information (6) to be transmitted in the corresponding timeslot (4) and the information (7) to be transmitted in the same timeslot (4) from the further data.

**10.** Method according to Claim 9,
**characterized**
**in that** a logic exclusive-OR operation is used as the logic operation.

**11.** Method according to Claim 9 or 10,
**characterized**

**in that** the power control information (6) is recovered in the transmitter (2; 1) by means of appropriate decoding, with an estimated value being determined for the power control information during the decoding process on the basis of the value obtained by the logic operation from the corresponding bit in the coded data word.

12. Method according to one of the preceding claims, **characterized**
    **in that** the receiver (1) which produces the coded power control information (6) is a base station in a mobile radio system, and the transmitter (2) which receives the power control information and sets its transmission level appropriately is a mobile station in the mobile radio system, so that the coded power control information (6) is transmitted via a downlink connection between the receiver (1) and the transmitter (2).

13. Radio system
    having a transmitter (2; 1), and
    having a receiver (1; 2) for receiving a signal, which is transmitted via a transmission channel of the mobile radio system, from the transmitter (2; 1) and for evaluating the received signal, in order to produce power control information (6) which is dependent on it and to send this information, embedded in a timeslot structure (4), to the transmitter (2; 1), in which the transmitter (2; 1) is configured such that it sets the transmission power as a function of the power control information from the receiver (1; 2), in which the receiver (1; 2) is configured in such a manner that it codes the power control information (6) for a timeslot (4), and transmits it to the transmitter (2; 1), together with further data to be transmitted in the same timeslot (4),
    **characterized**
    **in that** the receiver (1; 2) is configured such that it codes the power control information (6) in a timeslot (4), with the addition of redundancy, together with further data to be transmitted in the same timeslot (4) to form a common data word, with at least one bit value in the data word depending on the power control information and on the further data.

14. Radio system according to Claim 13, **characterized**
    **in that** the receiver (1; 2) is configured in such a manner that it codes the power control information (6) together with data from format identification information (7) for the same timeslot (4).

15. Radio system according to Claim 13, **characterized**
    **in that** the receiver (1; 2) is configured such that it codes the power control information (6) together with user data (7) for the same timeslot (4).

16. Radio system according to one of Claims 13-15, **characterized**
    **in that** the receiver (1; 2) is configured such that it sends the power control information (6) to the transmitter (2; 1) in binary form.

17. Radio system according to Claim 16, **characterized**
    **in that** the receiver (1; 2) is configured such that it codes the bits in the power control information (6) together with the bits in the further data to form a common binary data word (b1...b6).

18. Radio system according to Claim 17, **characterized**
    **in that** the receiver (1; 2) is configured such that, during the coding process, it assigns at least one bit (b1, b2) in the coded common data word the value of the power control information (6) to be transmitted in the corresponding timeslot (4).

19. Radio system according to Claim 17 or 18, **characterized**
    **in that** the receiver (1; 2) is configured such that, during the coding process, it assigns at least one bit (b5, b6) in the coded common data word the value of the information (7) to be transmitted in the corresponding timeslot (4) from the further data.

20. Radio system according to one of Claims 17-19, **characterized**
    **in that** the receiver (1; 2) is configured such that, during the coding process, it assigns at least one bit (b4) in the coded common data word a value which corresponds to a logic operation between the power control information (6) to be transmitted in the corresponding timeslot (4) and the information (7) to be transmitted in the same timeslot (4) from the further data.

21. Radio system according to Claim 20, **characterized**
    **in that** the logic operation carried out by the receiver (1; 2) during the coding process is a logic exclusive-OR operation.

22. Radio system according to Claim 20 or 21, **characterized**
    **in that** the transmitter (2; 1) is configured such that, after receiving the coded common data word, it recovers the power control information (6) by means of appropriate decoding and, in the process, determines an estimated value for the power control information on the basis of the value obtained by the logic operation from the corresponding bit in the coded common data word.

23. Radio system according to one of Claims 13-22,

**characterized**
**in that** the radio system is a CDMA mobile radio system.

24. Radio system according to Claim 23,
**characterized**
**in that** the receiver (1) which produces the coded binary power control information (6) is a base station in the mobile radio system, and the transmitter (2) which receives the power control information and sets its transmission power appropriately is a mobile station in the mobile radio system.

**Revendications**

1. Procédé de régulation de la puissance d'émission dans un système radio,
dans lequel un signal d'un émetteur (2; 1) reçu par un récepteur (1; 2) par un canal de transmission de système radio est évalué et en fonction de cette évaluation, une information de régulation de puissance (6) est créée et est envoyée à l'émetteur (2; 1) en étant incorporé dans une structure à fenêtres temporelles (4),
la puissance d'émission étant réglée dans l'émetteur (2; 1) en fonction de l'information de régulation de puissance (6) et
l'information de régulation de puissance (6) d'une fenêtre temporelle (4) est codée dans le récepteur (1; 2) ensemble avec d'autres données qui doivent être transmises dans la même fenêtre temporelle (4) et est transmise à l'émetteur (2; 1),
**caractérisé en ce que**
le codage est réalisé de telle sorte que l'information de régulation de puissance (6) d'une fenêtre temporelle (4) est codée avec ajout de redondance ensemble avec d'autres données qui doivent être transmises dans la même fenêtre temporelle (4) en un mot de données commun, la valeur d'au moins un bit du mot de données dépendant de l'information de régulation de puissance et des autres données.

2. Procédé selon la revendication 1,
**caractérisé en ce que**
les autres données avec lesquelles l'information de régulation de puissance (6) est codée conjointement sont des données d'information de caractérisation de format (7).

3. Procédé selon la revendication 1,
**caractérisé en ce que**
les autres données avec lesquelles l'information de régulation de puissance (6) est codée conjointement sont des données utiles (8).

4. Procédé selon l'une des revendications précédentes,
**caractérisé en ce que**
l'information de régulation de puissance est transmise en mode binaire.

5. Procédé selon la revendication 4,
**caractérisé en ce que**
les bits de l'information de régulation de puissance (6) sont codés ensemble avec les bits des autres données en un mot binaire de données commun (b1, ..., b6).

6. Procédé selon la revendication 5,
**caractérisé en ce que**
le mot de données codé comprend un nombre de bits (b1, ..., b6) qui correspond à la somme des bits de l'information de régulation de puissance (6) et des bits des autres données.

7. Procédé selon les revendications 5 ou 6,
**caractérisé en ce que**
lors du codage, on attribue à au moins un bit (b1, b2) du mot de données codé la valeur de l'information de régulation de puissance (6) à transmettre dans la fenêtre temporelle (4) correspondante.

8. Procédé selon l'une des revendications 5 à 7,
**caractérisé en ce que**
lors du codage, la valeur de l'information (7) des autres données à transmettre dans la fenêtre temporelle (4) correspondante est attribuée à au moins un bit (b5, b6) du mot de données codé.

9. Procédé selon l'une des revendications 5 à 8,
**caractérisé en ce que**
lors du codage, on attribue à au moins un bit (b4) du mot de données codé la valeur qui correspond à une opération logique entre l'information de régulation de puissance (6) à transmettre dans la fenêtre temporelle (4) correspondante et l'information (7) des autres données à transmettre dans la même fenêtre temporelle (4).

10. Procédé selon la revendication 9,
**caractérisé en ce que**
comme opération logique, on utilise une opération logique OU exclusif.

11. Procédé selon la revendication 9 ou 10,
**caractérisé en ce que**
l'information de régulation de puissance (6) est récupérée dans l'émetteur (2; 1) par un décodage approprié et **en ce que** lors du décodage, une valeur estimée de l'information de régulation de puissance est déterminée à l'aide de la valeur, obtenue à l'aide de l'opération logique, du bit correspondant du mot de données codé.

**12.** Procédé selon l'une des revendications précédentes,

**caractérisé en ce que**

le récepteur (1) qui crée l'information de régulation de puissance (6) codée est un poste de base d'un système de radiocommunication mobile, l'émetteur (2) qui reçoit l'information de régulation de puissance et qui règle sa puissance d'émission de manière correspondante étant un poste mobile du système de régulation mobile, de sorte que l'information codée de régulation de puissance (6) est transmise entre le récepteur (1) et l'émetteur (2) par une liaison descendante.

**13.** Système radio

qui comporte un émetteur (2; 1) et

un récepteur (1; 2) pour recevoir par un canal de transmission du système de radiocommunication mobile le signal transmis par l'émetteur (2; 1) et pour évaluer le signal reçu pour créer en fonction de cette évaluation une information de régulation de puissance (6) et l'envoyer à l'émetteur (2; 1) en l'incorporant dans une structure de fenêtres temporelles (4),

l'émetteur (2; 1) étant configuré de manière à régler sa puissance d'émission en fonction de l'information de régulation de puissance provenant du récepteur (1; 2),

le récepteur (1; 2) étant configuré de manière à coder l'information de régulation de puissance (6) d'une fenêtre temporelle (4) ensemble avec d'autres données à transmettre dans la même fenêtre temporelle (4) et la transmettant à l'émetteur (2; 1),

**caractérisé en ce que**

le récepteur (1; 2) est configuré de manière à coder l'information de régulation de puissance (6) d'une fenêtre temporelle (4) avec ajout de redondance ensemble avec d'autres données à transmettre dans la même fenêtre temporelle (4) en un mot de données commun, la valeur d'au moins un bit du mot de données dépendant de l'information de régulation de puissance et des autres données.

**14.** Système radio selon la revendication 13,
**caractérisé en ce que**

le récepteur (1; 2) est configuré de telle sorte qu'il code l'information de régulation de puissance (6) ensemble avec des données d'une information de caractérisation de format (7) de la même fenêtre temporelle (4).

**15.** Système radio selon la revendication 13,
**caractérisé en ce que**

le récepteur (1; 2) est configuré de telle sorte qu'il code l'information de régulation de puissance (6) ensemble avec des données utiles (7) de la même fenêtre temporelle (4).

**16.** Système radio selon l'une des revendications 13 à 15,

**caractérisé en ce que**

le récepteur (1; 2) est configuré de telle sorte qu'il envoie l'information de régulation de puissance (6) à l'émetteur (2; 1) en mode binaire.

**17.** Système radio selon la revendication 16,
**caractérisé en ce que**

le récepteur (1; 2) est configuré de telle sorte qu'il code les bits de l'information de régulation de puissance (6) avec les bits des autres données en un mot binaire de données commun (b1, ..., b6).

**18.** Système radio selon la revendication 17,
**caractérisé en ce que**

le récepteur (1; 2) est configuré de telle sorte que lors du codage, il attribue à au moins un bit (b1, b2) du mot de données commun codé la valeur de l'information de régulation de puissance (6) à transmettre dans la même fenêtre temporelle (4).

**19.** Système radio selon les revendications 17 et 18,
**caractérisé en ce que**

le récepteur (1; 2) est configuré de telle sorte que lors du codage, il attribue à au moins un bit (b5, b6) du mot codé commun de données la valeur de l'information (7) des autres données à transmettre dans la fenêtre temporelle (4) correspondante.

**20.** Système radio selon l'une des revendications 17 à 19,

**caractérisé en ce que**

le récepteur (1; 2) est configuré de telle sorte que lors du codage, il attribue à au moins un bit (b4) du mot de données codé commun une valeur qui correspond à une opération logique entre l'information de régulation de puissance (6) à transmettre dans la fenêtre temporelle (4) correspondante et de l'information (7) des autres données à transmettre dans la même fenêtre temporelle (4).

**21.** Système radio selon la revendication 20,
**caractérisé en ce que**

l'opération logique exercée lors du codage par le récepteur (1; 2) est une opération logique OU exclusif.

**22.** Système radio selon la revendication 20 ou 21,
**caractérisé en ce que**

l'émetteur (2; 1) est configuré de telle sorte qu'à la réception du mot de données codé commun, il récupère l'information de régulation de puissance (6) par décodage approprié et **en ce qu'**il détermine ainsi une valeur estimée de l'information de régulation de puissance à l'aide de la valeur, obtenue par l'opération logique, du bit correspondant du mot de données codé commun.

**23.** Système radio selon l'une des revendications 13 à 22,
**caractérisé en ce que**
le système radio est un système de radiocommunication mobile CDMA.

**24.** Système radio selon la revendication 23,
**caractérisé en ce que**
le récepteur (1) qui crée l'information (6) binaire codée de régulation de puissance est un poste de base du système de radiocommunication mobile, l'émetteur (2) qui reçoit l'information de régulation de puissance et qui règle la puissance de son émission de façon correspondante étant un poste mobile du système de radiocommunication mobile.

# FIG 1

| DPCCH | | DPDCH |
|---|---|---|
| Pilot-Bitfolge | TPC/TFI-Bits<br>b1 \| b2 \| b3 \| b4 \| b5 \| b6 | Datenbits |

5        6/7        8

| Schlitz#1 | Schlitz#2 | ... | Schlitz#n | ... | Schlitz#16 | ~ 4 |

| Rahmen #1 | Rahmen #2 | ... | Rahmen #i | ... | Rahmen #72 | ~ 3 |

# FIG 2

# FIG 3 (STAND DER TECHNIK)